# EUROPEAN PATENT APPLICATION

(11) **EP 4 019 850 A1**
(43) Date of publication of application: **29.06.2022**
(21) Application number: 21214807.6
(22) Date of filing: 15.12.2021
(51) Int. Cl.: F24C 15/16, H05B 6/64, A47J 37/06

(54) **A COOKING APPLIANCE WITH A WIRE RACK**

(30) Priority: 22.12.2020 TR 202021188
(71) Applicant: BSH Hausgeräte GmbH, 81739 München (DE)
(72) Inventor: Cigal, Serkan, 59500 TEKIRDAG (TR); Sevgen, Erdem, Tekirdag (TR)

(57) **Abstract**

The present invention relates to a cooking appliance with a wire rack system (1) comprising; a cavity for inserting the rack system (1), two supporting rails (7), mounted on the side cavity wall for carrying the rack system (1), two wire rack (2) to be combined for interlocking with the supporting rails (7). As an improvement, the wire rack system (1) comprising; recesses (4), placed on the frame (3) as being positioned at least one lateral side edge of the wire rack (2) and protrusions (5) mounted to the recesses (4) on the frame (3) as being positioned at least one lateral side edge of the wire rack (2) for overlapping with the corresponding recess (4) to assemble at least two wire racks (2).

## Description

### TECHNICAL FIELD

The present invention relates to a wire rack system and a domestic cooking appliance with a wire rack system.

### PRIOR ART

Wire racks are known in various configurations. In this context, different designs as a grid or the like are known. These can usually be introduced into a cooking space in which the food placed.

Conventional wire racks are usually one-piece parts whose shape and size cannot be changed. In this context, they are usually designed to the maximum in order to be able to offer the greatest possible space in a horizontal plane in the cooking space for placing the food or a preparation vessel with the food. Very often, however, this entire size of the food support is not required. In addition, it is disadvantageous to clean the wire rack because of the size.

The document numbered EP 2639515A1 discloses a cooking product carrier which has primary support module that is provided for receiving food to be cooked and/or cooking vessel. The coupling devices are provided to connect the primary support module and secondary support module. The secondary support module is adapted to receive food to be cooked and/or cooking vessel. The coupling device is provided with the hinge-like pivotal connecting portions. The hinge-like pivotal connecting portion is provided with locking unit. The support module is in the form of baking metal sheet or grill pan.

The invention provides an additional improvement, an additional advantage or an alternative to the prior art.

### BRIEF DESCRIPTION OF THE INVENTION

An object of the present invention is to create a modular wire rack system for a cooking appliance which can be used in a more user-friendly and flexible manner according to the requirements.

The invention, to achieve the abovementioned purpose, is a wire rack system comprising; two wire racks to be combined and a frame, encircling the wire rack. As an improvement, recesses are placed on the frame as being positioned at least one lateral side edge of the wire rack and protrusions are mounted to thee recesses on the frame as being positioned at least one lateral side edge of the wire rack for overlapping with the corresponding recesses to assemble at least two wire racks. Moreover, a cooking household appliance with a wire rack system is also provided.

In a possible embodiment of the invention, two wire racks are fixed with attachment. Thus, durability of the system is increased. Moreover, a quick and secure connection between two wire racks thus be created.

In a possible embodiment of the invention, the attachment is hinge. Thus, no additional fastening means, such as screws, pins, bolts or knobs, are required to fasten the wire racks. This simplifies production. Additionally, this provides user to practical usage. Moreover, this provides the user very quick connection and disconnection of the wire racks. So, the system is mechanically very stable and resilient.

In a possible embodiment of the invention, the attachment (6) is made of a stainless steel material. Since biocompatible material is used, healthy cooking is provided and user-friendly design is also achieved.

In a possible embodiment of the invention, attachment is made of heat resistant thermoplastic material. Thus, easy cleaning is provided. Additionally, wire rack system becomes lighter and mechanically more stable and resilient.

In a possible embodiment of the invention, the protrusion is cylindrical shaped rod and coupled to the framework in such a way that extending in a longitudinal direction. This provides to encounter the protrusion with the corresponding recess. Thus, the wire rack system can be released very quickly and easily, so that a user-friendly design is also achieved.

In a possible embodiment of the invention, a method to obtaining the wire rack system is provided by: interlocking the recess (4) on one of the lateral side edge of wire rack (2) with the protrusion (5) on one of the corresponding lateral side edge of the other wire rack (2) in the direction of gravity and fixing the two different frames (3) of the two different wire racks (2) by means of the at least one attachment (6). Thus, detachment of the wire rack system without being destroyed can be provided easily. As a result, the wire racks can also be completely separated from one another, so that a significant advantage is achieved with regard to further use, for example cleaning or the like.

In this context, with the indications "front", "upper", "below", "top", "bottom" etc. the positions and orientations given for intended use and intended arrangement of the cooking device and for a user then standing in front of the cooking device in a closed position and viewing in the direction of the device are indicated.

### BRIEF DESCRIPTION OF THE FIGURES

The figures, whose brief explanations are herewith provided, are solely intended for providing a better understanding of the present invention and are as such not intended to define the scope of protection or the context in which said scope is to be interpreted in the absence of the description.
Fig.1 represents the interior perspective view of a cooking appliance of the present invention with the wire rack system.
Fig. 2 represents the front view of a cooking appliance of the present invention with the wire rack system.
Fig. 3 represents the perspective view of the wire rack system for a cooking appliance of the present invention.
Fig. 4 represents the perspective view of the separated wire racks of the wire rack system for a cooking appliance of the present invention.
Fig. 5 represents the perspective view of the three combined wire racks to produce a wire rack system for a cooking appliance of the present invention.
Fig. 6 represents the interior view of a cooking appliance of the present invention with the wire rack system comprising three wire racks.
Fig. 7 represents the perspective view of three combined wire racks and attachments to produce a wire rack system for a cooking appliance of the present invention.
Fig. 8 represents the bottom view of three combined wire racks and attachments to produce a wire rack system for a cooking appliance of the present invention.
Fig. 9 represents the extended view of the attachments and protrusions of a wire rack system for a cooking appliance of the present invention.
Fig. 10 represents the perspective view of three combined wire racks, one of them is folded and attachments to produce a wire rack system for a cooking appliance of the present invention.

### DETAILED DESCRIPTION OF THE FIGURES

Referring to the figures summarized above, the present invention proposes a wire rack system (1) for a cooking device. The system (1) is composed of combining two wire racks (2), each of them is encircled by a frame (3). Additionally, there are recesses (4), and protrusions (5) which are mounted to the recesses (4) on the frame (3) as being positioned at least one lateral side edge of the wire rack (2) for overlapping with the corresponding recess (4). By means of those recesses (4) and protrusions (5 two or more wire racks (2) can be combined to compose a wire rack system (1) that can be used in wide ranged/sized cookers.

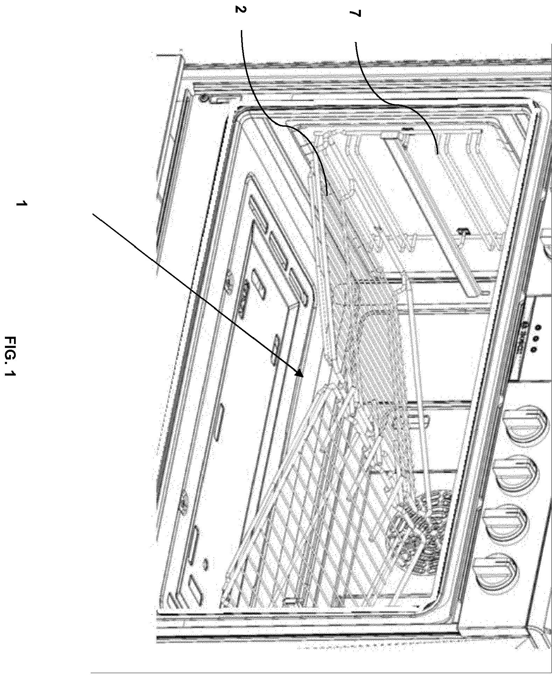

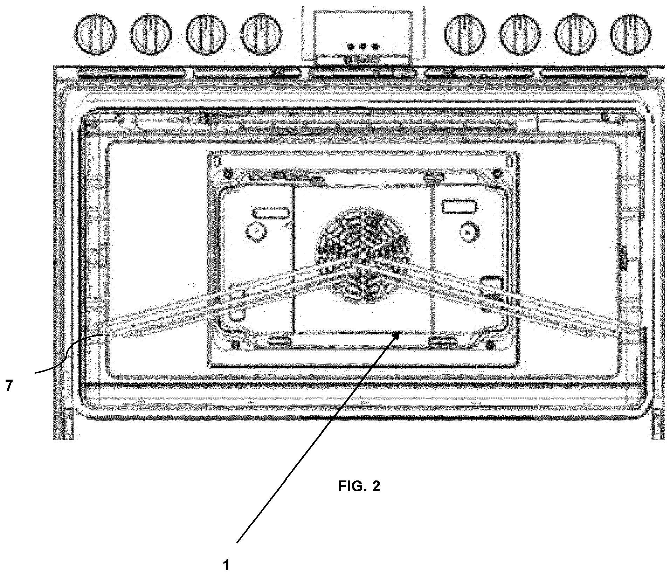

Fig 1. and Fig 2. show an interior front part of a cooking appliance with the wire rack system (1) comprising two combined wire racks (2). Also the supporting rails (7) can be seen from these figures which are mounted to side walls of cavity to encounter the wire racks (2). In other words, the wire rack system (1) interlocks the supporting rails (7) to provide the durability of the system (1). The supporting rail (7) has a structure obtaining with combination of two parallel wire. The wire rack (2) is slip through these wires and so the system (1) is supported by means of the supporting rails (7).

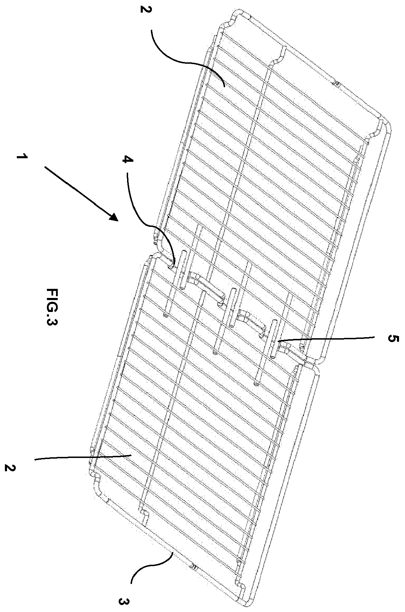

Fig. 3 shows a perspective illustration of an exemplary embodiment of the wire rack system (1) with two wire racks (2) are incorporated with each other. The frame (3) is surrounded on the each wire racks (2). There are also recesses (4) on the frame (3). At each recess (4), a protrusion (5) is mounted. At least one protrusion (5) should be exists on the frame (3) for overlapping with the corresponding recess (4) to assemble the two different wire racks (2). These protrusions (5) have cylindrical shaped rods and they are coupled to the frame (3) in such a way that extending in a longitudinal direction. Each of the protrusion (5) is combined by moving in the direction of gravity by engaging with the corresponding recess (4) which is provided on the other wire rack (2) for combining two wire racks (2) and producing the wire rack system (1).

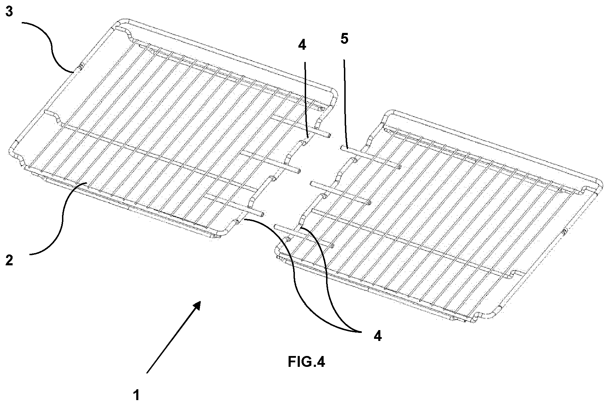

Fig. 4 shows a perspective illustration of an exemplary embodiment of the wire rack system (1) with two wire racks (2) arranged separately from one another. The wire racks (2) can be separated by moving the wire racks (2) on the opposite direction of gravity. Thus, the protrusion (5) moves away from the corresponding recess (4). Hence, simple cleaning of the separated wire racks (2) is also possible, in particular they can also be placed in a dishwasher for cleaning.

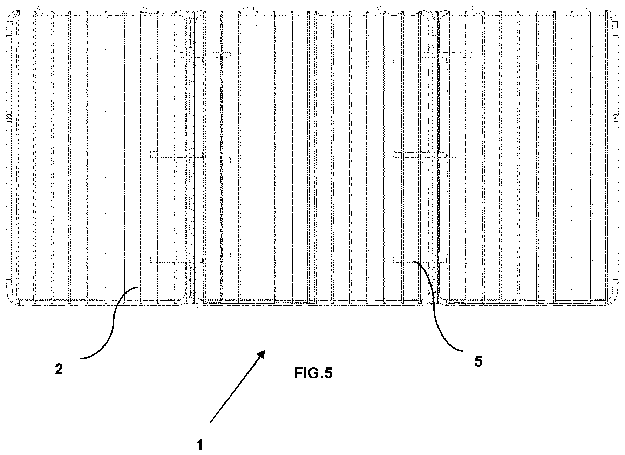

A perspective illustration of a further exemplary embodiment of the system (1) with three wire racks (2) are incorporated with each other on a linear horizontal plane which can be seen from Fig 5. At the both side edges of the system (1), the frames (3) of the wire racks (2) will be interlocked with the supporting rails (7), mounted on the side cavity walls. On the opposite side edges of the frame (3) and supporting rail (7) interaction, frame (3) of the wire racks (2) have at least one recess (4) and at least one protrusion (5), provided on the recess (4). The third wire rack (2) of the exemplary embodiment is located in the middle of the system (1) and at both side edges of the frame (3), there are at least one recess (4) and at least one protrusion (5) on the recess (4). Protrusions (5) on the recess (4) of the frame (3) are overlapped with the corresponding recess (4) of the other wire rack (2) to assemble and produce the wire rack system (1). The protrusion (5) is fastened or welded on the recess (4).

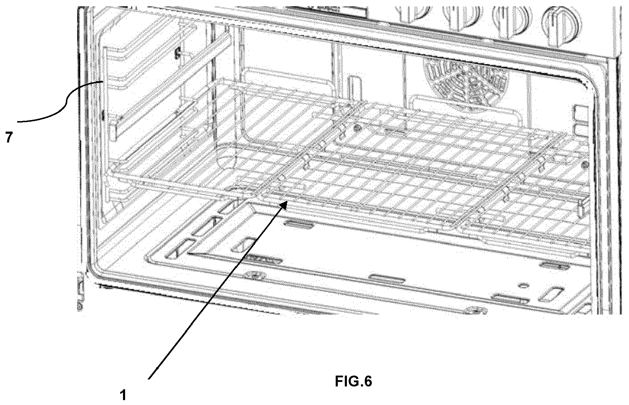

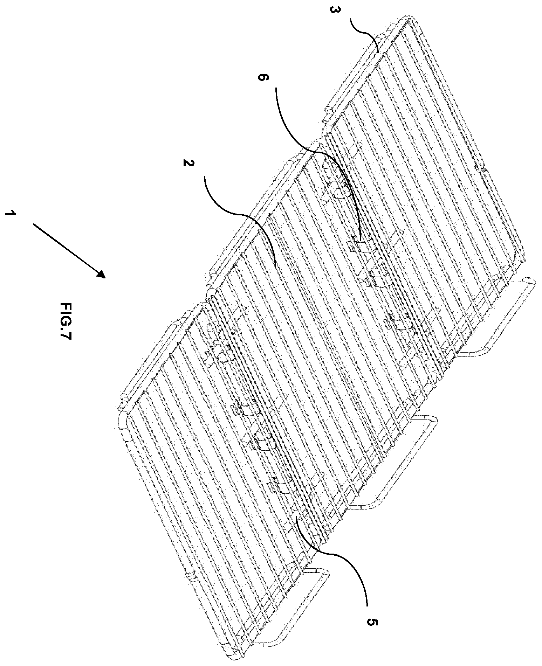

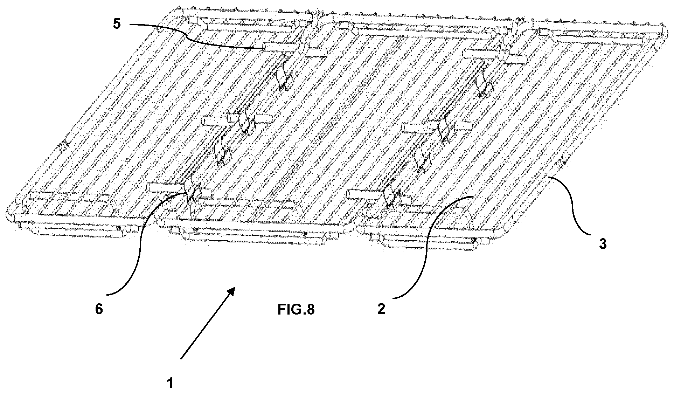

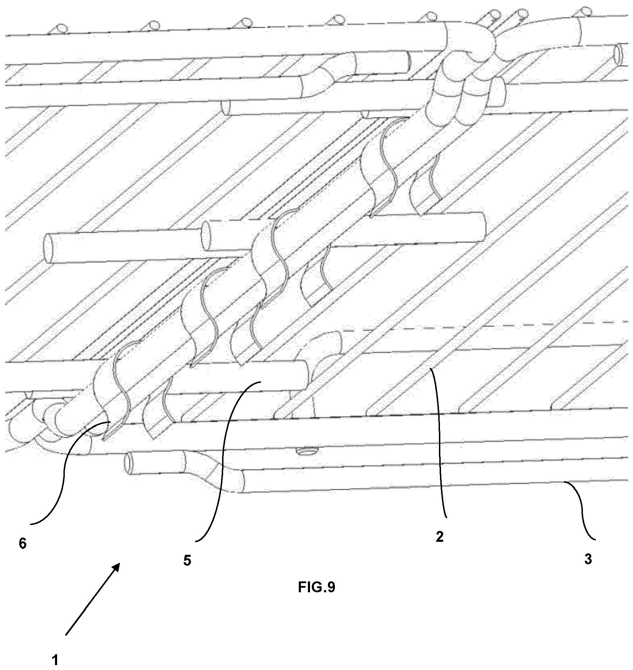

As can be seen from the illustration in Fig. 6, the system (1) can be used in wide ranged cookers according to the requirement of users. As illustrated in Fig.6-10, an attachment (6) is used to combine the adjacent frames (3) of the wire racks (2). The attachments (6) provides the mechanical stability and resilience to the system (1). Thus, undesired pivoting of the wire racks (2) relative to one another about the horizontal axis is prevented. The attachment (6) can be a hinge which is made of a stainless steel or a heat resistant thermoplastic material. Detailed illustration of the attachment (6) can ben seen form Fig 9.

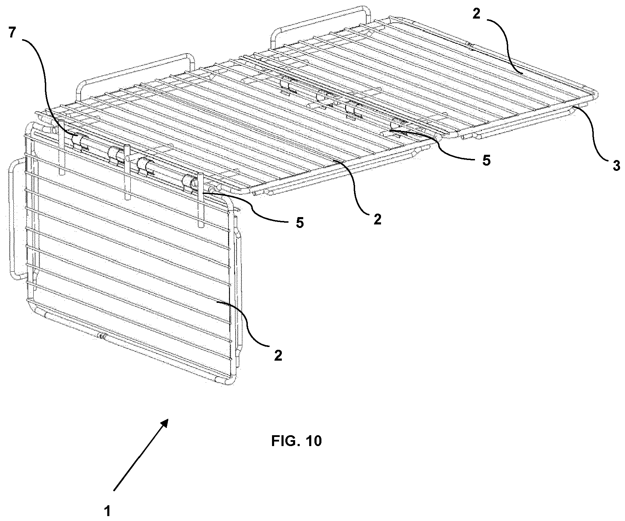

Moreover, as can be seen from Fig. 10, the wire racks (2) in the system (1) can be folded to create extra space during storage or cleaning process.

The wire rack system (1) according to the invention is designed in such a way that its size can be changed and for this purpose it has a modular structure. Such a configuration of wire rack system (1) enables a high degree of variability with regard to size and shape of cooking appliance, so that it can be individually designed and adapted in this regard.

The present invention provides advantages with regard to specific sizes of an item or appliance to be used or a preparation vessel arranged thereon. In addition, such a modular construction of the wire rack system (1) enables a change in size and/or shape in a non-destructive, reversible manner. Thanks to this flexibility, wire rack system (1) can be set up and designed individually by users. It can thus be changed depending on the requirements easily without requiring extra tool. The modular connection of the wire racks (2) thus enables a great variety of changes to the wire rack system (1) in terms of size, shape and function.

In particular, this is also advantageous that the wire rack system (1) can be cleaned easily or placed in a dishwasher for cleaning as separate pieces. Besides, storage of the system (1) becomes more comfortable since the separation and folding is possible.

The wire rack system (1) of the present invention is suitable for using in any cooking appliance such as a freestanding oven, a built-in oven, a microwave oven, an electrical cooker, a hybrid cooker or a gas cooker.

### REFERENCE LIST

- 1.: Wire rack system
- 2.: Wire rack
- 3.: Frame
- 4.: Recess
- 5.: Protrusion
- 6.: Attachment
- 7.: Supporting rail

## Claims

1. A wire rack system (1) for a cooking device comprising;
at least two wire racks (2) to be combined,
each wire rack comprising a frame (3), encircling the wire rack (2) and **characterized in that**
each of the racks comprises at least one recess (4), placed on the frame (3) as being positioned on at least one lateral side edge of the wire rack (2) and
at least one of the racks comprises at least one protrusion (5) mounted to the recess (4) on the frame (3) as being positioned on at least one lateral side edge of the wire rack (2) for overlapping with the corresponding recess (4) of the other rack in order to link together the at least two wire racks (2).

2. The wire rack system (1) for a cooking device according to claim 1, wherein the at least two wire racks (2) are fixed to each other with at least one attachment (6).

3. The wire rack system (1) for a cooking device according to claim 2, wherein the attachment (6) is an elastically detachable clamp.

4. The wire rack system (1) for a cooking device according to claim 2, wherein the attachment (6) is fixed to the frame (3) on at least one lateral side edge of the wire rack (2) and on the corresponding lateral side edge of the frame (3) of the other wire rack (2).

5. The wire rack system (1) for a cooking device according to any of the preceeding claims, wherein the attachment (6) is providing a hinged connection between the two wire racks.

6. The wire rack system (1) for a cooking device according to any of the preceeding claims, wherein the attachment (6) is made of a stainless steel material.

7. The wire rack system (1) for a cooking device according to any of the preceeding claims, wherein the attachment (6) is made of heat resistant thermoplastic material.

8. The wire rack system (1) for a cooking device according to any of the preceeding claims, wherein the protrusion (5) is cylindrical shaped rod and coupled to the frame (3) in such a way that extending in a longitudinal direction.

9. A method to obtaining the wire rack system (1) for a cooking device according to any of the preceeding claims, comprising the steps of;
interlocking the recess (4) on one of the lateral side edge of wire rack (2) with the protrusion (5) on one of the corresponding lateral side edge of the other wire rack (2) in the direction of gravity,
fixing the two different frames (3) of the two different wire racks (2) by means of the at least one attachment (6).

10. A cooking appliance with a wire rack system (1) according to claim 1, comprising;
a cavity for inserting the rack system (1),
at least two supporting rails (7), mounted on the side cavity wall for carrying the rack system (1),
at least two wire rack (2), to be combined for interlocking with the supporting rails (7) and **characterized in that** the wire rack system (1) comprising;
at least one recess (4), placed on the frame (3) as being positioned at least one lateral side edge of the wire rack (2) and
at least one protrusion (5) mounted to the recess (4) on the frame (3) as being positioned at least one lateral side edge of the wire rack (2) for overlapping with the corresponding recess (4) to assemble at least two wire racks (2).

11. The cooking appliance with a wire rack system (1) according to any of the preceeding claims, wherein the domestic cooking appliance is a freestanding oven, a built-in oven, a microwave oven, an electrical cooker, a hybrid cooker or a gas cooker.
